# EUROPEAN PATENT SPECIFICATION

(11) **EP 2 839 978 B1**
(45) Date of publication and mention of the grant of the patent: **06.04.2016**
(21) Application number: 13425117.2
(22) Date of filing: 22.08.2013
(51) Int. Cl.: B60F 3/00

(54) **Amphibious vehicle**
Amphibienfahrzeug
Véhicule amphibie

(43) Date of publication of application: 25.02.2015
(73) Proprietor: Nattero, Mario, 16125 Genova (IT); Manfioletti, Maurizio, 29121 Piacenza (IT)
(72) Inventor: Nattero, Mario, I-16125 GENOVA (IT); Manfioletti, Maurizio, I-29121 PIACENZA (IT)
(74) Representative: Rapisardi, Mariacristina

(56) References cited:
- EP-A1- 0 449 341
- EP-A1- 0 872 366
- EP-A2- 1 000 778
- FR-A1- 2 770 805
- US-A1- 2009 124 143

## Description

The present invention refers to an amphibious vehicle.

Modular improved amphibious vehicles are known for example from EP 0872 366 A1 or FR 2 770805 A1, which is considered as the closest prior art, and discloses the features of the preamble of claim 1. There are vehicles, in some cases floating, but more often amphibious, i.e. capable of moving both in water and on land, made for specific work or aid requirements (for example civil protection), whose performance can prove to be inadequate if exceptional external circumstances occur.

This normally brings about the need to have recourse to different vehicles, normally oversized, causing disadvantages, delays and an increase in costs.

The technical task which the present invention aims to perform is, therefore, to create an amphibious vehicle which enables the technical disadvantages complained of hitherto to be eliminated from the known designs.

Within the scope of this technical task an object of the invention is to create an amphibious vehicle which lends itself with extreme flexibility to use in a wide range of applications.

Another object of the invention is to create an amphibious vehicle which is capable of operating with extreme effectiveness irrespective of the external environmental conditions.

Not least of the objects of the invention is to create an amphibious vehicle which has a simplified construction, modifiable in an extremely simple and rapid way to adapt to the environmental conditions in which it finds itself operating.

The technical task, as well as these and other objects, are achieved according to the present invention by creating an amphibious vehicle comprising a principal unit, at least one first auxiliary module, and releasable coupling means for the rigid connection between the principal unit and the first auxiliary module, the principal unit comprising a first hull, a first motor, first wheels for travelling on land operable by the first motor, and a first and at least one second screw propeller operable by the first motor, said first auxiliary module comprising a second hull, a second motor, second wheels for travelling on land, and at least one third propeller operable by the second motor, said vehicle having a configuration for travelling on land on the first and second wheels, and a configuration for navigation wherein the first auxiliary module is rigidly connected to the principal unit with the front end of the second hull fitting together with the rear end of the first hull to integrate the waterlines of the principal unit and the first auxiliary module, and said first and at least one second screw propeller are positioned mainly or completely outside the external lateral profile of the first hull and of the second hull in order to operate as far as possible in free water and thus considerably increase their thrust output. The amphibious vehicle according to the invention makes it possible to use, as principal unit, a pre-existing vehicle built for more limited requirements without the need to modify its characteristics, or limiting as far as possible the adaptations necessary for integrating the auxiliary modules.

Consequently it is not absolutely necessary to design a specific and particular principal unit.

On the contrary, according to the present invention, in the field of displacement or semi-displacement navigation, an amphibious vehicle with modular structure is envisaged, wherein one or more auxiliary modules can be attached to a principal unit depending on the specific needs, in particular to ensure a level of performance especially in terms of speed both in internal waters and in open sea waters, including in the presence of wave movement and even if the vehicle weighs a considerable amount.

The present invention also discloses a method of operating an amphibious vehicle, integrating a principal unit with at least one auxiliary module, the principal unit comprising a first hull, a first motor, and at least one first and one second screw propeller operable by the first motor, the first auxiliary module comprising a second hull, a second motor and at least one third propeller operable by the second motor, characterised in that in a configuration for travelling on land the principal unit moves on first wheels and the first auxiliary module is towed on second wheels by means of an articulated connection to the principal unit, and characterised in that to achieve a configuration for navigation the first auxiliary module is connected rigidly to the principal unit, making the front end of the second hull fit together with the rear end of the first hull to integrate the waterlines of the principal unit and the first auxiliary module, and said at least one first and one second screw propeller are positioned mainly or completely outside the external lateral profile of said first and second hulls.

Other characteristics of the present invention are defined, furthermore, in the dependent claims.

Further characteristics and advantages of the invention will become more evident from the description of a preferred, but not exclusive, embodiment of the amphibious vehicle according to the invention, illustrated by way of indication but without limiting effect, in the attached drawings, in which:

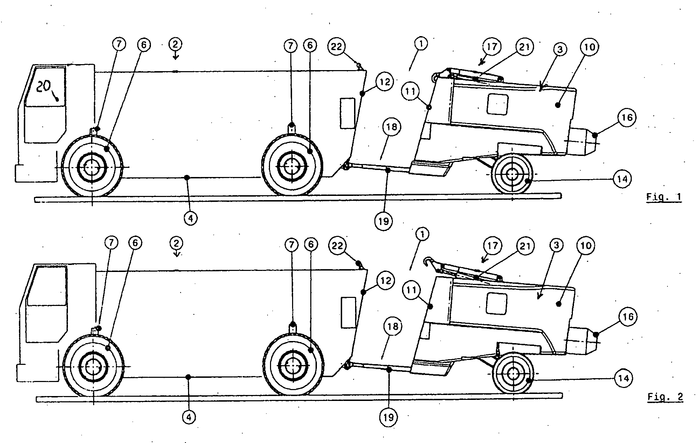

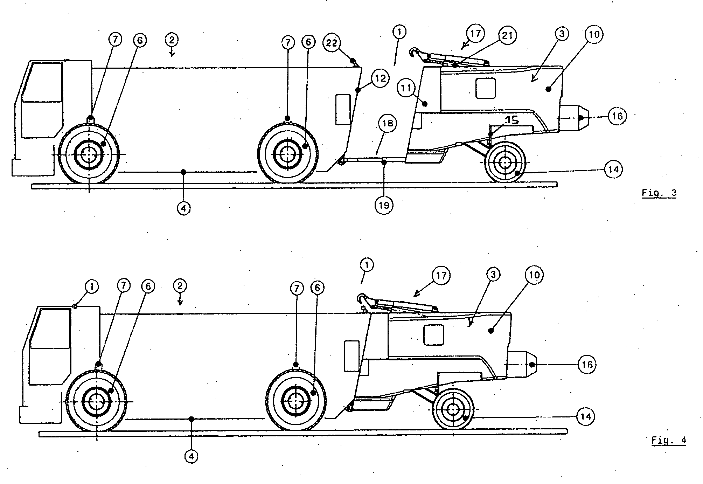

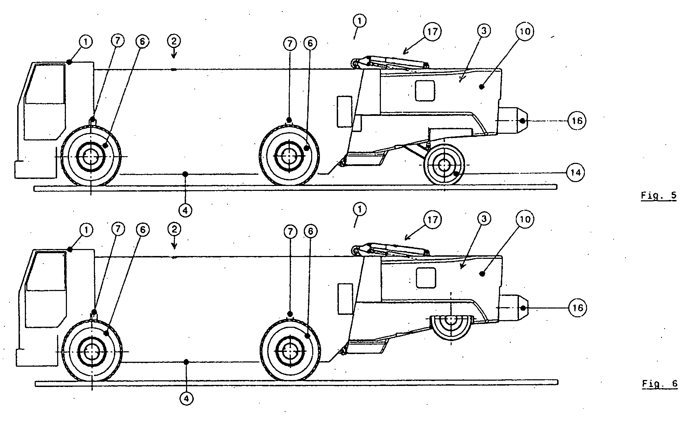

figures 1 to 6 show schematically in sequence the stages of conversion of the amphibious vehicle from the configuration assumed for travelling on land to the configuration assumed for navigation;

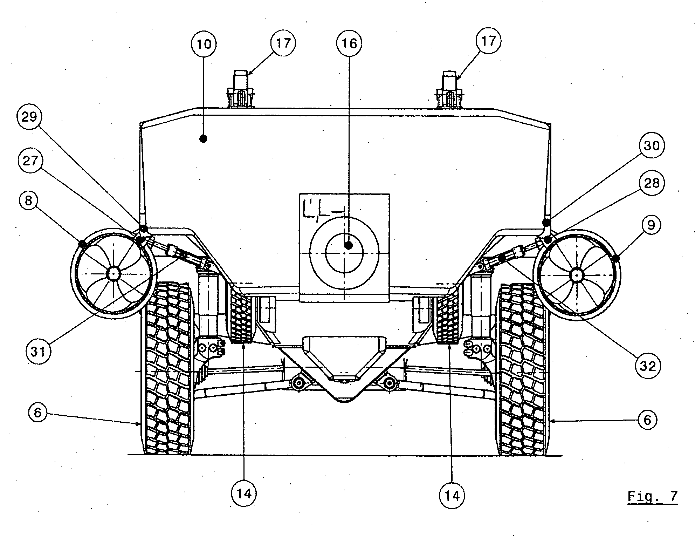

figure 7 shows a rear view of the amphibious vehicle in configuration for navigation;

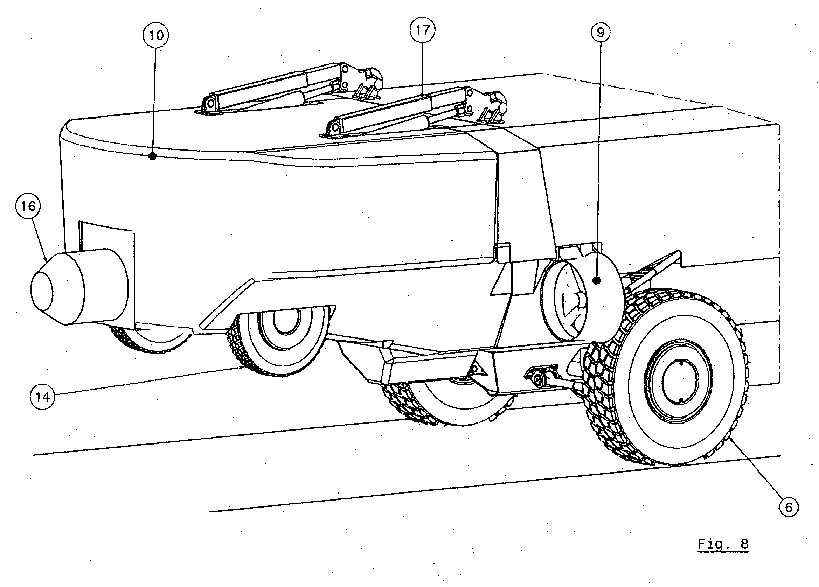

figure 8 shows a perspective view of a part of the amphibious vehicle in configuration for navigation; and

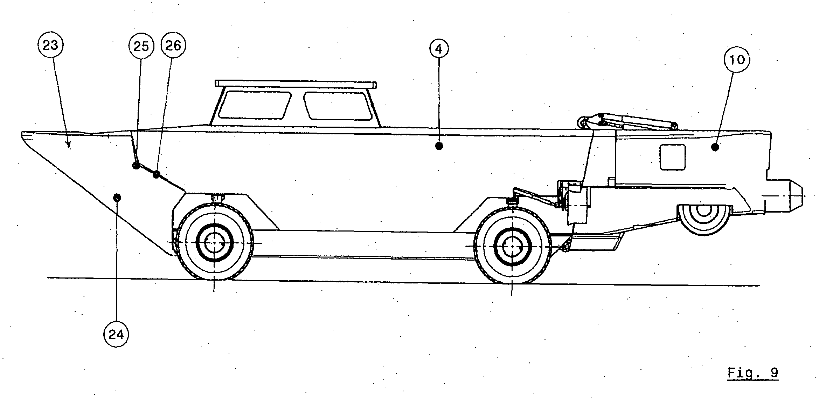

figure 9 shows a schematic view in side elevation of an amphibious vehicle conforming to a second preferred mode of embodiment of the invention, in configuration for navigation and with a second auxiliary module acting as bows coupled to its front end.

With reference to the aforementioned drawings, an amphibious vehicle is shown, indicated in its entirety by the reference number 1, which can reversibly assume a configuration for travelling on land and a configuration for navigation.

The amphibious vehicle 1 comprises a principal unit 2 and at least one auxiliary first module 3, and releasable coupling means 17 for the rigid connection between the principal unit 2 and the first auxiliary module 3.

The principal unit 2 comprises a driving position 20, a control unit (not shown), a first hull 4, a first motor (not shown), first wheels 6 with tyres for travelling on land operable by the first motor and provided with first adjustable suspensions 7, a first screw propeller 8 and at least one second screw propeller 9 operable by the first motor. More precisely the first screw propeller 8 and the second screw propeller 9 are positioned in mirror-image locations with respect to the centre-line vertical longitudinal plane L of the first hull 4.

Both the first screw propeller 8 and the second screw propeller 9 have manual adjustment means for the pitch configuration of the propeller.

The first auxiliary module 3 comprises a second hull 10 having a front end 11 configured for fitting with the rear end 12 of the first hull 4, a second motor (not shown), second wheels 14 with tyres for travelling on land and equipped with second adjustable suspensions 15, for example self-adjusting hydropneumatic suspensions, and at least one third propeller 16, preferably of hydrojet type or alternatively of screw type, operable by the second motor. In particular the propeller 16 is positioned in the centre-line vertical longitudinal plane L' of the second hull 10.
All the systems for the second motor (intake, exhaust, cooling, hydraulic system, control and regulation units) are installed inside the first auxiliary module 3.

The releasable coupling means 17 comprise one or more hydraulically operated coupling arms 21 supported in the upper position and/or along the sides of the second hull 10.

The coupling arms 21 can be engaged in coupling housings 22 suitably supported in the upper position and/or along the sides of the first hull 4.

The amphibious vehicle 1 comprises towing means 18 for the articulated connection of the first auxiliary module 3 to the principal unit 2.

The towing means 18 comprise in particular a telescopic bar 19 operable by a suitable hydraulic actuator (not shown).

The amphibious vehicle 1 also comprises electrical connection means (not shown) between the principal unit 2 and the first auxiliary module 3, to subordinate the first auxiliary module 3 to the control unit provided in the principal unit 2. Advantageously the electrical connection is activated as an extension of the rigid mechanical connection of the first auxiliary module 3 to the principal unit 2. Preferably the amphibious vehicle 1 comprises a second auxiliary module 23 usable particularly in the configuration for navigation.

The second auxiliary module 23 comprises a third hull 24 having a rear end 25 suitable for fitting together with the front end 26 of the first hull 4.

The second auxiliary module 23 acts as a bows suitable for reducing resistance to movement and to ensure furthermore the required navigation characteristics in rough waters.

The second auxiliary module 23 is a hollow element completely closed and therefore floating and thus allows the amphibious vehicle 1 to noticeably improve its freeboard. This hollow element is preferably divided into two symmetrical parts to facilitate its assembly and uncoupling prior to a possible launch of the amphibious vehicle 1.

With the second auxiliary module 23 the amphibious vehicle 1 can be taken to significant speeds (for example Froude number > 0.6) without suffering from a longitudinal arrangement which makes it front-heavy.

In the configuration for travelling on land the principal unit 2 is supported on the front wheels 6, and the first auxiliary module 3 is supported on the second wheels 14, while in the configuration for navigation the first wheels 6 are in a position more retracted towards the first hull 4 and the second wheels 14 are in a position more retracted towards the second hull 10.

To carry out the movement of the axis of the first wheels 6, the height of the first suspensions 7 is adjusted, and similarly to carry out the movement of the axis of the second wheels 14, the height of the second suspensions 15 is adjusted.

In the configuration for travelling on land the first motor is in operation to move the first wheels 6, the coupling means 17 are released while the towing means 18 are operative for the articulated connection of the first auxiliary module 3 to the principal unit 2. The first auxiliary module 3 functions in this configuration as a simple trailer.

In the configuration for navigation of the amphibious vehicle 1, however, the first auxiliary module 3 is electrically connected to the principal unit 2 by the engagement of the electrical connection means, and rigidly mechanically connected to the principal unit 2 by the engagement of the coupling means 17, with the front end 11 of the second hull 10 fitting together with the rear end 12 of the first hull 4 to integrate the waterlines of the principal unit 2 and the first auxiliary module 3 in order to reduce resistance to movement and the formation of vortices. The second auxiliary module 23 also, if required, is fixed in the navigation configuration to the principal unit 2, with the rear end 25 of the third hull 24 fitting together with the front end 26 of the first hull 4 to integrate the waterlines of the principal unit 2 and the second auxiliary module 23 in order to reduce resistance to movement and the formation of vortices.

In the configuration for navigation, furthermore, the first motor is in operation to drive the first screw propeller 8 and the second screw propeller 9, while the second motor is in operation to drive the third propeller 16.

To achieve the configuration for navigation the first auxiliary module 3 is subjected to a roto-translation, as a result of the combined action of the shortening of the telescopic bar 19, of the movement of the axis of the second wheels 14 and of the engagement of the coupling arms 21 in the coupling housings 22. The centre-line longitudinal planes L, L', in the configuration for navigation thus obtained, now coincide.

Advantageously the screw propellers 8 and 9 are designed in such a way as to be able to be positioned mainly or completely outside the external lateral profile both of the first hull 4 and of the second hull 10 in order to operate as far as possible in free water and thus considerably increase their thrust output.

For this reason each screw propeller 8,9 is supported in oscillatable way and, in particular, is supported by a corresponding bracket 27, 28 pivoted by means of a corresponding pin 29, 30 on the first hull 4, and each bracket 27, 28 is operable in rotation by a corresponding actuator 31, 32 comprising, for example, a hydraulic pump which draws power from the first motor.

During navigation all operations of adjustment and control of the first auxiliary module 3, such as controlling the speed of the second motor, can be performed from the driving position 20. The manoeuvrability of the vehicle 1 is ensured by the driving system of the principal unit 2. In fact the flow of thrust of the third propeller 16 on the third auxiliary module 3 is monodirectional. In other words the thrust delivered by the third propeller 16 serves to allow the screw propellers 8 and 9 to develop a sufficient thrust added to the thrust of the third propeller 16 itself. The optimisation of the system of propulsion naturally derives from the correct balance between the thrust components due to the screw propellers 8 and 9 and to propeller 16.

In the event that the third propeller 16 is of hydrojet type, the hydrojet propulsion can assist the screw propulsion which at some navigation speeds can also be the sole active propulsion. In the case of navigation with the third, hydrojet, propeller 16 and the screw propellers 8 and 9 in combined action, the screws can modify their pitch configuration by a simple operation between the root of the vanes and the hub, to adapt better to the new speed or more exactly to the new wake due to the presence of hydrojet propulsion. One unique aspect of the adoption of a third, hydrojet, propeller 16 lies in its pairing with screw propellers which are, as is well-known, extremely different.

It must be pointed out that the principal unit 2 is capable of navigating independently, and it is only when navigation is envisaged which the principal unit 2 is not capable of satisfying autonomously that the first auxiliary module 3 is coupled to the principal unit 2.

In this case, when preparing for navigation, in proximity to the area of use, which may be a river bank or the seashore or an equipped ship, the first auxiliary module 3 is rigidly connected to the principal unit 2, with action being taken as said over the height of the second suspensions 15, over the retraction of the telescopic bar 19 and over the action of the coupling arms 21. The entire sequence is performed through the hydraulic system of the first auxiliary module 3 and can, if required, be completely automated. Next, the first auxiliary module 3 is made subordinate to the control unit installed on the principal unit 2 through the electrical connection means or through a radio system, and the second wheels 14 are retracted inside the second hull 10. At the end, the first auxiliary module 3 is hooked onto the rear part of the principal unit 2 and completely controlled by it.

On the approach to the coast or at the disembarkation stage the second auxiliary module can be released from the principal unit 2 and abandoned to allow the vehicle 1 to be completely operational as soon as it reaches land.

The first auxiliary module 3 is released, but maintains the articulated connection to the principal unit 2 through the towbar 19. The second suspensions 15 are lowered and the second motor is switched off.

The first auxiliary module 3 is towed by the principal unit 2 until solid ground is reached and can then be automatically disconnected completely and abandoned after applying the brakes.

Where it is more convenient the first auxiliary module 3 can remain rigidly coupled to the principal unit 2 until solid ground is reached and can there be released and abandoned after applying the brakes.

It is also possible to abandon it in water, at a certain distance from the bank, securing it automatically to a system of anchor and buoy.

As is evident from the description, one of the salient aspects of the invention concerns the first auxiliary module 3 whose characteristics can be adapted to the individual principal unit 2 to which it is planned to couple it.

The performance obtainable depends clearly on the level of installed power on the first auxiliary module; the navigation mode is of displacement or semi-displacement type, depending on the characteristics of the mother vehicle, and an indicative value for speed can anyway oscillate around 10 - 14 knots.

The adaptations to the principal unit 2 are extremely minor, even in the case of an already existing principal unit 2: in particular it can be sufficient to attach to an existing principal unit 2 a tow hook for the telescopic bar 19, possibly with remote-controlled release, and a series of mechanical/electrical interface blocks, to be welded to the first hull 4.

The control unit of the first auxiliary module 3 can comprise a portable console to be simply connected to the electrical power supply of the principal unit 2.

A distinctive characteristic of the amphibious vehicle 1 consists therefore in an "add-on" or "plug-in" type of construction, in which the auxiliary modules which can be integrated into the amphibious vehicle 1 are completely independent of it. This makes it possible to increase the performance of the principal unit 2 in terms of speed and seaworthiness, but absolutely without impairing the characteristics which it already possesses.

The amphibious vehicle thus conceived is susceptible of numerous modifications and variants, all falling within the scope of the inventive concept; all the details are furthermore replaceable by technically equivalent elements.

In practice the materials employed and also the dimensions can be any according to the requirements and the state of the art.

## Claims

1. An amphibious vehicle (1) comprising a principal unit (2), at least one first auxiliary module (3), the principal unit (2) comprising a first hull (4), a first motor, first wheels (6) for travelling on land, operable by the first motor, and a first and at least one second screw propeller (8, 9) operable by the first motor, said first auxiliary module (3) comprising a second hull (10), a second motor, second wheels (14) for travelling on land, and at least one third propeller (16) operable by the second motor, **characterised by** comprising releasable coupling means (17) for the rigid connection between the principal unit (2) and the first auxiliary module (3), said vehicle (1) having a configuration for travelling on land on the first and second wheels (6, 14), and a configuration for navigation wherein the first auxiliary module (3) is rigidly connected to the principal unit (2) with the front end (11) of the second hull (10) fitting together with the rear end (12) of the first hull (4) to integrate the waterlines of the principal unit (2) and the first auxiliary module (3), and said first and at least one second screw propeller (8, 9) are positioned mainly or completely outside the external lateral profile of the first hull (4) and of the second hull (10) in order to operate as far as possible in free water and thus considerably increase their thrust output.

2. An amphibious vehicle (1) according to claim 1, **characterised in that** said first and at least one second screw propeller (8, 9) are supported in oscillatable way to assume a position more retracted towards the first hull (4) in the configuration for travelling on land.

3. An amphibious vehicle (1) according to any preceding claim, **characterised in that** the axis of said first and respectively second wheels (6, 14) is displaceable to assume a position more retracted towards the first and respectively second hull (4, 10) in the configuration for navigation.

4. An amphibious vehicle (1) according to any preceding claim, **characterised by** comprising towing means (18) for the articulated connection of the first auxiliary module (3) to the principal unit (2).

5. An amphibious vehicle (1) according to the preceding claim, **characterised in that** said towing means (18) comprise a telescopic bar (19).

6. An amphibious vehicle (1) according to any preceding claim, **characterised by** having electrical connection means between the principal unit (2) and the first auxiliary module (3), in order to subordinate the first auxiliary module (3) to a control unit provided in the principal unit (2).

7. An amphibious vehicle (1) according to the preceding claim, **characterised in that** said electrical connection is activated as an extension of the rigid mechanical connection.

8. An amphibious vehicle (1) according to any preceding claim, **characterised in that** said first and second screw propellers (8, 9) comprise adjustment means for the pitch configuration of the screw.

9. An amphibious vehicle (1) according to any preceding claim, **characterised by** comprising a second auxiliary module (23) comprising a third hull (24) which in the configuration for navigation is coupled to the principal unit (2) with its rear end (25) fitting together with the front end (26) of the first hull (4) to integrate the waterlines of the principal unit (2) and the second auxiliary module (23).

10. An amphibious vehicle (1) according to any preceding claim, **characterised in that** said coupling means (17) comprise one or more hydraulic-action coupling arms (21) positioned at the top and/or at the sides of the second hull (10).

11. An amphibious vehicle (1) according to any preceding claim, **characterised in that** said second hull (10) floats autonomously.

12. An amphibious vehicle (1) according to any preceding claim, **characterised in that** said at least one third propeller (16) is of hydrojet or screw type.

13. A method of operating an amphibious vehicle (1) integrating a principal unit (2) with at least one auxiliary module (3), the principal unit (2) comprising a first hull (4), a first motor and at least one first and one second screw propeller (8, 9) operable by the first motor, the first auxiliary module (3) comprising a second hull (10), a second motor and at least one third propeller (16) operable by the second motor, **characterised in that** in a configuration for travelling on land the principal unit (2) moves on first wheels (6) and the first auxiliary module (3) is towed on second wheels (14) by means of an articulated connection to the principal unit (2), and to achieve a configuration for navigation the first auxiliary module (3) is rigidly connected to the principal unit (2), making the front end (11) of the second hull (10) fit together with the rear end (12) of the first hull (4) to integrate the waterlines of the principal unit (2) and of the first auxiliary module (3), and said at least one first and one second screw propeller (8, 9) are positioned mainly or completely outside the external lateral profile of said first and said second hulls (4, 10).

14. A method of operating an amphibious vehicle (1) according to the preceding claim, **characterised in that** to achieve the configuration for navigation the first wheels (6) and respectively the second wheels (14) are retracted towards the first hull (4) and respectively towards the second hull (10).

15. A method of operating an amphibious vehicle (1) according to either of claims 13 and 14, **characterised in that** in the configuration for navigation the combined propulsion is activated with said first, second and third propellers (8, 9, 16).

## Patentansprüche

1. Amphibienfahrzeug (1), umfassend eine Haupteinheit (2), mindestens ein erstes Hilfsmodul (3), wobei die Haupteinheit (2) eine erste Haut (4), einen ersten Motor, erste Räder (6) zum Fahren an Land, betätigbar über den ersten Motor, und einen ersten und mindestens einen zweiten Schraubenpropeller (8, 9) umfasst, betätigbar über den ersten Motor, wobei das erste Hilfsmodul (3) eine zweite Haut (10), einen zweiten Motor, zweite Räder (14) zum Fahren an Land und mindestens einen dritten Propeller (16) umfasst, betätigbar über den zweiten Motor umfasst, **dadurch gekennzeichnet, dass** es lösbare Kupplungsmittel (17) für die steife Verbindung zwischen der Haupteinheit (2) und dem ersten Hilfsmodul (3) umfasst, wobei das Fahrzeug (1) eine Konfiguration zum Fahren an Land auf den ersten und zweiten Rädern (6, 14) aufweist, und eine Konfiguration für die Navigation, wobei das erste Hilfsmodul (3) steif an die Haupteinheit (2) mit dem frontseitigen Ende (11) der zweiten Haut (10) angeschlossen ist, verbunden mit dem rückseitigen Ende (12) der ersten Haut (4), um die Wasserlinien der Haupteinheit (2) und des ersten Hilfsmoduls (3) zu integrieren, und der erste und der mindestens zweite Schraubenpropeller (8, 9) hauptsächlich oder vollständig außerhalb des äußeren Seitenprofils der ersten Haut (4) und der zweiten Haut (10) positioniert sind, um so weit wie möglich in freiem Wasser zu arbeiten und so ihre Schubleistung erheblich zu erhöhen.

2. Amphibienfahrzeug (1) nach Anspruch 1, **dadurch gekennzeichnet, dass** der erste und der mindestens zweite Schraubenpropeller (8, 9) schwenkbar gelagert sind, um in der Konfiguration für das Fahren an Land eine Position einzunehmen, die zur ersten Haut (4) weiter zurückgezogen ist.

3. Amphibienfahrzeug (1) nach einem der vorhergehenden Ansprüche, **dadurch gekennzeichnet, dass** die Achse der ersten und jeweils zweiten Räder (6, 14) verschiebbar ist, um in der Konfiguration für die Navigation eine Position einzunehmen, die zur ersten und jeweils zweiten Haut (4, 10) weiter zurückgezogen ist.

4. Amphibienfahrzeug (1) nach einem der vorhergehenden Ansprüche, **dadurch gekennzeichnet, dass** es Ziehmittel (18) für die Gelenkverbindung des ersten Hilfsmoduls (3) mit der Haupteinheit (2) umfasst.

5. Amphibienfahrzeug (1) nach dem vorhergehenden Anspruch, **dadurch gekennzeichnet, dass** die Ziehmittel (18) eine Teleskopstange (19) umfassen.

6. Amphibienfahrzeug (1) nach einem der vorhergehenden Ansprüche, **dadurch gekennzeichnet, dass** es elektrische Verbindungsmittel zwischen der Haupteinheit (2) und dem ersten Hilfsmodul (3) aufweist, um das erste Hilfsmodul (3) einer Steuereinheit unterzuordnen, die in der Haupteinheit (2) bereitgestellt ist.

7. Amphibienfahrzeug (1) nach dem vorhergehenden Anspruch, **dadurch gekennzeichnet, dass** die elektrische Verbindung als Verlängerung der steifen mechanischen Verbindung aktiviert wird.

8. Amphibienfahrzeug (1) nach einem der vorhergehenden Ansprüche, **dadurch gekennzeichnet, dass** der erste und der zweite Schraubenpropeller (8, 9) Einstellmittel für die Neigungskonfiguration der Schraube umfassen.

9. Amphibienfahrzeug (1) nach einem der vorhergehenden Ansprüche, **dadurch gekennzeichnet, dass** es ein zweites Hilfsmodul (23) umfasst, umfassend eine dritte Haut (24), die in der Konfiguration für die Navigation mit der Haupteinheit (2) gekoppelt ist, wobei deren rückseitiges Ende (25) mit dem frontseitigen Ende (26) der ersten Haut (4) verbunden ist, um die Wasserlinien der Haupteinheit (2) und des zweiten Hilfsmoduls (23) zu integrieren.

10. Amphibienfahrzeug (1) nach einem der vorhergehenden Ansprüche, **dadurch gekennzeichnet, dass** die Kupplungsmittel (17) einen oder mehrere hydraulisch wirkende Kupplungsarme (21) umfassen, die an der Oberseite und/oder den Seiten der zweiten Haut (10) positioniert sind.

11. Amphibienfahrzeug (1) nach einem der vorhergehenden Ansprüche, **dadurch gekennzeichnet, dass** die zweite Haut (10) eigenständig schwimmt.

12. Amphibienfahrzeug (1) nach einem der vorhergehenden Ansprüche, **dadurch gekennzeichnet, dass** der mindestens eine dritte Propeller (16) vom Wasserstrahl- oder Schraubentyp ist.

13. Verfahren für den Betrieb eines Amphibienfahrzeugs (1), wobei eine Haupteinheit (2) mit mindestens einem Hilfsmodul (3) integriert wird, wobei die Haupteinheit (2) eine erste Haut (4), einen ersten Motor und mindestens einen ersten und einen zweiten Schraubenpropeller (8, 9), betätigbar über den ersten Motor, aufweist, wobei das erste Hilfsmodul (3) eine zweite Haut (10), einen zweiten Motor und mindestens einen dritten Propeller (16) aufweist, betätigbar über den zweiten Motor, **dadurch gekennzeichnet, dass** sich die Haupteinheit (2) in einer Konfiguration zum Fahren an Land auf ersten Rädern (6) bewegt und das erste Hilfsmodul (3) auf zweiten Rädern (14) gezogen wird, mittels einer Gelenkverbindung mit der Haupteinheit (2), wobei das erste Hilfsmodul (3) steif mit der Haupteinheit (2) verbunden ist, um eine Konfiguration für die Navigation zu erreichen, wobei das frontseitige Ende (11) der zweiten Haut (10) mit dem rückseitigen Ende (12) der ersten Haut (4) verbunden wird, um die Wasserlinien der Haupteinheit (2) und des ersten Hilfsmoduls (3) zu integrieren, und wobei mindestens ein erster und ein zweiter Schraubenpropeller (8, 9) hauptsächlich oder vollständig außerhalb des äußeren Seitenprofils der ersten und der zweiten Haut (4, 10) positioniert sind.

14. Verfahren für den Betrieb eines Amphibienfahrzeugs (1) nach dem vorhergehenden Anspruch, **dadurch gekennzeichnet, dass** die ersten Räder (6) und jeweils die zweiten Räder (14) zur ersten Haut (4) und jeweils zur zweiten Haut (10) zurückgezogen sind.

15. Verfahren für den Betrieb eines Amphibienfahrzeugs (1) nach Anspruch 13 und 14, **dadurch gekennzeichnet, dass** der kombinierte Antrieb in der Konfiguration für die Navigation mit dem ersten, zweiten und dritten Propeller (8, 9, 16) aktiviert wird

## Revendications

1. Véhicule amphibie (1) comprenant une unité principale (2), au moins un premier module auxiliaire (3), l'unité principale (2) comprenant une première coque (4), un premier moteur, des premières roues (6) pour se déplacer sur terre, actionnables par le premier moteur, et un premier et au moins un second propulseur à hélice (8, 9) actionnables par le premier moteur, ledit premier module auxiliaire (3) comprenant une seconde coque (10), un second moteur, des secondes roues (14) pour se déplacer sur terre, et au moins un troisième propulseur (16) actionnable par le second moteur, **caractérisé en ce qu'**il comprend des moyens d'accouplement amovibles (17) permettant l'assemblage rigide entre l'unité principale (2) et le premier module auxiliaire (3), ledit véhicule (1) ayant une configuration pour circuler sur terre sur les premières et secondes roues (6, 14), et une configuration pour la navigation dans lequel le premier module auxiliaire (3) est rigidement assemblé à l'unité principale (2) avec l'extrémité antérieure (11) de la seconde coque (10) pouvant s'accoupler à l'extrémité postérieure (12) de la première coque (4) pour intégrer les lignes de flottaison de l'unité principale (2) et du premier module auxiliaire (3), et ledit premier et au moins un second propulseur à hélice (8, 9) sont positionnés principalement ou complètement à l'extérieur du profil latéral externe de la première coque (4) et de la seconde coque (10) afin d'opérer autant que possible en eau libre augmentant ainsi considérablement leur force de poussée.

2. Véhicule amphibie (1) selon la revendication 1, **caractérisé en ce que** lesdits premier et au moins un second propulseur à hélice (8, 9) sont supportés de façon oscillante pour prendre une position plus rétractée en direction de la première coque (4) dans la configuration de circulation sur terre.

3. Véhicule amphibie (1) selon l'une quelconque des revendications précédentes, **caractérisé en ce que** l'axe desdites premières et respectivement secondes roues (6, 14) peut se déplacer pour prendre une position plus rétractée en direction de la première et respectivement de la seconde coque (4, 10) dans la configuration de navigation.

4. Véhicule amphibie (1) selon l'une quelconque des revendications précédentes, **caractérisé en ce qu'**il comprend des moyens de traction (18) destinés à l'assemblage articulé du premier module auxiliaire (3) à l'unité principale (2).

5. Véhicule amphibie (1) selon la revendication précédente, **caractérisé en ce que** lesdits moyens de traction (18) comprennent une barre télescopique (19).

6. Véhicule amphibie (1) selon l'une quelconque des revendications précédentes, **caractérisé en ce qu'**il possède des moyens de connexion électriques entre l'unité principale (2) et le premier module auxiliaire (3) afin de subordonner le premier module auxiliaire (3) à une unité de commande prévue dans l'unité principale (2).

7. Véhicule amphibie (1) selon la revendication précédente, **caractérisé en ce que** ladite connexion électrique est activée comme une extension de l'assemblage mécanique rigide.

8. Véhicule amphibie (1) selon l'une quelconque des revendications précédentes, **caractérisé en ce que** lesdits premier et second propulseurs à hélice (8, 9) comprennent des moyens de réglage destinés à la configuration du pas de l'hélice.

9. Véhicule amphibie (1) selon l'une quelconque des revendications précédentes, **caractérisé en ce qu'**il comprend un second module auxiliaire (23) comprenant une troisième coque (24) qui, dans la configuration de navigation, est accouplée à l'unité principale (2) avec son extrémité arrière (25) pouvant s'accoupler à l'extrémité antérieure (26) de la première coque (4) pour intégrer les lignes de flottaison de l'unité principale (2) et du second module auxiliaire (23).

10. Véhicule amphibie (1) selon l'une quelconque des revendications précédentes, **caractérisé en ce que** lesdits moyens d'accouplement (17) comprennent un ou plusieurs bras d'accouplement à force hydraulique (21) positionnés au sommet et/ou sur les côtés de la seconde coque (10).

11. Véhicule amphibie (1) selon l'une quelconque des revendications précédentes, **caractérisé en ce que** ladite seconde coque (10) flotte de façon autonome.

12. Véhicule amphibie (1) selon l'une quelconque des revendications précédentes, **caractérisé en ce que** ledit au moins un troisième propulseur (16) est de type à hydrojet ou à hélice.

13. Mode de fonctionnement d'un véhicule amphibie (1) intégrant une unité principale (2) avec au moins un module auxiliaire (3), l'unité principale (2) comprenant une première coque (4), un premier moteur et au moins un premier et un second propulseur à hélice (8, 9) actionnables par le premier moteur, le premier module auxiliaire (3) comprenant une seconde coque (10), un second moteur et au moins un troisième propulseur (16) actionnable par le second moteur, **caractérisé en ce que**, dans une configuration de circulation sur terre, l'unité principale (2) se déplace sur des premières roues (6) et le premier module auxiliaire (3) est tracté sur des secondes roues (14) au moyen d'un assemblage articulé à l'unité principale (2), et pour réaliser une configuration de navigation, le premier module auxiliaire est rigidement assemblé à l'unité principale (2), faisant en sorte que l'extrémité antérieure (11) de la seconde coque (10) puisse s'accoupler avec l'extrémité postérieure (12) de la première coque (4) pour intégrer les lignes de flottaison de l'unité principale (2) et du premier module auxiliaire (3), et lesdits au moins un premier et un second propulseur à hélice (8, 9) sont positionnés principalement ou complètement à l'extérieur du profil latéral externe desdites première et seconde coques (4, 10).

14. Mode de fonctionnement d'un véhicule amphibie (1) selon la revendication précédente, **caractérisé en ce que** pour réaliser la configuration de navigation, les premières roues (6) et respectivement les deuxièmes roues (14) sont rétractées en direction de la première coque (4) et respectivement en direction de la seconde coque (10).

15. Mode de fonctionnement d'un véhicule amphibie (1) selon les revendications 13 et 14, **caractérisé en ce que** dans la configuration de navigation, la propulsion combinée est activée par lesdits premier, second et troisième propulseurs (8, 9, 16).
